# FASCICULE DE BREVET EUROPEEN

(11) **EP 0 892 188 B1**
(45) Date de publication et mention de la délivrance du brevet: **24.09.2003**
(21) Numéro de dépôt: 98401729.3
(22) Date de dépôt: 08.07.1998
(51) Int. Cl.: F16D 23/14

(54) **Butée de débrayage avec surface d'attaque rapportée**
Kupplungsausrücklager mit angesetzter Anschlagsdruckplatte
Clutch release bearing with attached abutment plate

(30) Priorité: 15.07.1997 FR 9708969
(43) Date de publication de la demande: 20.01.1999
(73) Titulaire: SKF FRANCE, F-92142 Clamart Cédex (FR)
(72) Inventeur: Kassidonis, Antoine, 92200 Chatenay-Malabry (FR); Binagwaho, Paul, 92370 Chaville (FR); Wilson, Pamphile, 92290 Chatenay-Malabry (FR); Ponson, Frédéric, 37230 Luynes (FR)
(74) Mandataire: Casalonga, Axel

(56) Documents cités:
- FR-A- 2 215 112
- FR-A- 2 544 035
- US-A- 4 026 399

## Description

La présente invention concerne le domaine des butées de débrayage destinées à agir sur le diaphragme d'un embrayage, en particulier pour un véhicule automobile.

L'invention s'applique aux butées de débrayage comprenant un roulement dont une des bagues est tournante et l'autre bague est fixe.

Entre la bague tournante et la bague fixe sont disposées des billes régulièrement réparties dans le sens circonférentiel au moyen d'une cage, la bague tournante étant munie d'une surface d'attaque sensiblement radiale destinée à venir en contact avec l'extrémité des doigts composant le diaphragme de l'embrayage. Un élément de manoeuvre supporte le roulement et, sous l'action d'un organe de commande (mécanique, électrique ou hydraulique), vient déplacer axialement le roulement de butée contre le diaphragme de l'embrayage. Un élément d'autocentrage est généralement interposé entre la bague fixe du roulement et l'élément de manoeuvre, ledit élément d'autocentrage assurant la liaison entre ces deux pièces tout en autorisant, par son élasticité, un déplacement radial relatif entre lesdites deux pièces.

Le roulement vient ainsi actionner l'embrayage par l'intermédiaire de sa bague tournante suivant un diamètre d'action défini par la zone de contact entre diaphragme et bague tournante du roulement de butée, que celle-ci soit massive ou en tôle. Les extrémités des doigts de diaphragme en contact avec la bague tournante de la butée peuvent avoir une forme plane ou bien arrondie et la surface de contact correspondante de la bague tournante peut également être de forme arrondie ou plane. Le roulement de butée peut s'autocentrer en fonctionnement sur le diaphragme grâce à l'élément d'autocentrage et à un jeu radial existant entre l'organe de manoeuvre et la bague fixe du roulement de butée.

La surface d'attaque d'une butée donnée possède donc un diamètre d'action utile qui lui est spécifique et n'est généralement pas apte à fonctionner avec des embrayages différents les uns des autres, soit de par leur diamètre d'action, soit de par la forme des extrémités de doigts de diaphragme. Il faut donc des bagues tournantes de butée adaptées à chaque série de diamètres d'action d'embrayage et également à la forme des extrémités des doigts de diaphragme. Ceci conduit à une multiplication des variantes de fabrication des butées de débrayage et à une augmentation des coûts de fabrication, de gestion et de stockage.

On connaît par le brevet français n° 73 02 385 une butée de débrayage dans laquelle une collerette d'attaque rapportée est emmanchée avec serrage sur une portée cylindrique de la bague intérieure tournante, permettant d'utiliser un même type de roulement de base pour différentes dimensions de diaphragme. Ce système est satisfaisant avec un roulement conventionnel à bague massive possédant des surfaces cylindriques pouvant fournir une portée suffisante pour l'emmanchement de la collerette d'attaque rapportée. Par contre, il ne peut être appliqué de façon fiable à un roulement de butée à bague en tôle du fait de la relative complexité des formes de bague par rapport à un roulement conventionnel et de l'absence de portée satisfaisante pour l'emmanchement de la collerette d'attaque rapportée.

Le document FR-A-2 544 035 décrit une butée d'embrayage du type tiré comportant un jonc de verrouillage entre une collerette d'attaque et la bague intérieure tournante du palier à roulement. Un élément élastique exerce un effort axial sur le jonc de verrouillage tendant à séparer la collerette d'attaque de la bague intérieure du palier qui supporte la collerette d'attaque. Ce document décrit uniquement l'utilisation des bagues massives et prévoit de solidariser la collerette d'attaque au moyen d'un jonc de verrouillage.

La présente invention a pour but de résoudre les problèmes des dispositifs décrits ci-dessus en proposant un roulement de butée simple et économique à bagues en tôle.

Tel qu'il est revendiqué, le dispositif de butée de débrayage est du type comprenant un palier à roulement muni d'une bague non tournante et d'une bague tournante réalisées en tôle, ledit dispositif étant capable d'agir sur un diaphragme de mécanisme d'embrayage, et comprenant une collerette d'attaque retenue par rapport à la bague tournante est prévue pour coopérer avec le diaphragme. Le dispositif comprend en outre des moyens de retenue élastique exerçant une précontrainte axiale sur la collerette d'attaque qui est maintenue en appui, par une face radiale interne, sur la bague tournante et est prévue pour entrer en contact avec le diaphragme par une face externe opposée à ladite face interne. On obtient ainsi une butée de débrayage économique, pourvue d'un roulement standard et capable de s'adapter à différents types de diaphragmes d'embrayage.

Avantageusement, la collerette d'attaque est réalisée en tôle.

Dans un mode de réalisation de l'invention, la collerette d'attaque est pourvue de moyens de centrage sur la bague tournante, dans le but de faciliter son montage et de garantir la précision de son positionnement.

Les moyens de centrage peuvent comprendre au moins un rabat capable de coopérer avec une surface complémentaire de la bague tournante.

Dans un mode de réalisation de l'invention, la collerette d'attaque comprend une face interne en appui sur la bague tournante et une face externe opposée à la face interne et prévue pour entrer en contact avec le diaphragme.

De préférence, le dispositif de butée de débrayage comprend des moyens de retenue élastiques de la collerette d'attaque sur la bague tournante, par exemple sous la forme d'un organe de liaison axialement élastique. L'organe de liaison peut comprendre une pluralité de pattes s'étendant axialement autour de la bague tournante et pourvues de fenêtres, la collerette d'attaque comprenant des excroissances radiales formant crochets capables de coopérer avec lesdites fenêtres. En variante, les pattes peuvent s'étendre axialement dans l'alésage de la bague tournante, de façon adjacente audit alésage. Les pattes peuvent être élastiques axialement.

Dans un mode de réalisation de l'invention, l'organe de liaison comprend une embase circulaire en forme de rondelle et venant en appui sur la bague tournante axialement à l'opposé de la collerette d'attaque. L'embase peut être pourvue d'ondulations circonférentielles assurant une certaine élasticité axiale.

On dispose ainsi d'un roulement de butée à bagues en tôle, de faible poids, de fabrication standardisée et pourvu d'une collerette d'attaque permettant son adaptation à des types différents de diaphragme d'embrayage.

L'invention sera mieux comprise et d'autres avantages apparaîtront à la description détaillée de quelques modes de réalisation pris à titre d'exemples nullement limitatifs et illustrés par les dessins annexés, sur lesquels :
la figure 1 est une vue de côté partiellement en coupe axiale d'une butée d'embrayage selon l'invention;
la figure 2 est une vue de derrière en élévation d'une butée d'embrayage selon l'invention;
la figure 3 est une vue de côté en élévation d'un organe de liaison;
la figure 4 est une vue de face en élévation de l'organe de liaison de la figure 3;
la figure 5 est une vue agrandie de la figure 2;
les figures 6 à 8 sont des variantes de la figure 5; et
la figure 9 est une en coupe axiale d'une butée d'embrayage selon un autre mode de réalisation de l'invention.

Comme on peut le voir sur les figures, la butée de débrayage comprend un palier à roulement 1 monté sur un élément de manoeuvre 2 au moyen d'un organe d'autocentrage 3. L'élément de manoeuvre 2 est monté sur un tube-guide 4 et comprend une partie tubulaire 2a et une partie radiale 2b réalisées en matériau synthétique surmoulé sur une plaque d'usure 6 adjacente à la partie radiale 2b et prévue pour entrer en contact avec des doigts de fourchette 5.

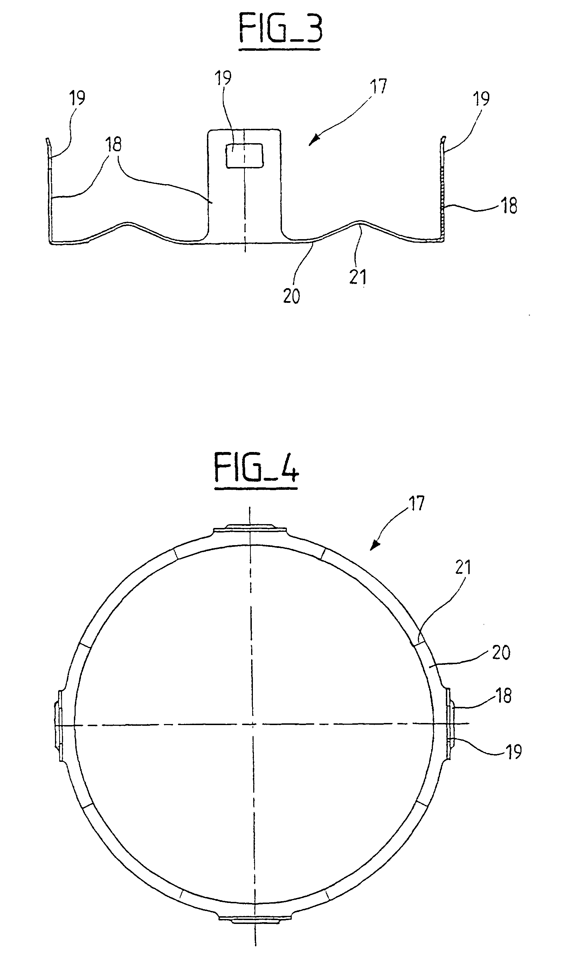

Le roulement 1 est disposé du côté de la partie radiale 2b de l'élément de manoeuvre 2 opposé à la plaque anti-usure 6. Le roulement 1 comprend une bague intérieure fixe 7, une bague extérieure tournante 8, réalisées en tôle emboutie, une rangée d'éléments roulants 9 maintenue par une cage 10 et disposée entre les bagues intérieure 7 et extérieure 8. La bague intérieure fixe 7 est pourvue d'une portion radiale 7a (figure 3) qui vient en contact avec la portion radiale 2b de l'élément de manoeuvre 2.

L'organe d'autocentrage 3 est disposé dans l'alésage de la bague intérieure 7 et comprend une pluralité de dents 11 flexibles radialement et s'étendant en direction de la portion tubulaire 2a de l'élément de manoeuvre 2. Le roulement 1 peut donc s'autocentrer par rapport à l'élément de manoeuvre 2 en provoquant le fléchissement des dents 11 de l'organe d'autocentrage 3. Une lèvre d'étanchéité 12 issue de l'organe d'autocentrage 3 s'étend axialement vers l'extérieur et vient frotter contre la bague extérieure tournante 8. Un organe d'étanchéité 13 est également prévu à l'autre extrémité du roulement 1.

La bague extérieure tournante 8 comprend une portion tubulaire 8a adjacente à la piste de roulement 8b prévue pour la rangée d'éléments roulants 9, et à l'organe d'étanchéité 13. Du côté axialement opposé à l'élément de manoeuvre 2, la bague extérieure 8 comprend une portion radiale 8c s'étendant vers l'intérieur. La portion radiale 8c est recouverte par une collerette d'attaque 14, réalisée en tôle emboutie, et comprenant une portion radiale 14a s'appliquant contre la portion radiale 8c de la bague extérieure 8, un rabat continu 14b entourant l'extrémité libre de la portion radiale 8c de la bague extérieure 8, un bourrelet 14c en saillie axialement vers l'extérieur disposé à l'extrémité de grand diamètre de la portion radiale 14a, et formant une surface de contact avec les doigts 15 (figure 3) d'un diaphragme d'embrayage.

Les doigts 15 sont de forme plate et le bourrelet 14c est de forme arrondie pour une bonne coopération entre ces deux éléments. La collerette d'attaque 14 se prolonge au-delà du bourrelet 14c par une portion axiale 14d et par quatre excroissances radiales formant des crochets 16 légèrement orientés axialement à l'opposé de l'élément d'attaque 2. Le rabat axial 14b et la portion axiale 14d confèrent à la collerette d'attaque 14 une grande rigidité. Le centrage sur la bague 8 peut se faire par l'une ou l'autre de ces portions axiales.

Les crochets 16 sont issus de la portion axiale extérieure 14d par découpe et repli.

Un organe de liaison 17 en tôle mince est prévu autour de la bague extérieure 8. L'organe de liaison 17 comprend quatre pattes axiales 18 dont l'extrémité libre est pourvue d'une fenêtre 19 dans laquelle fait saillie un crochet 16. L'autre extrémité de l'organe de liaison 17 comprend une portion radiale 20 formant une embase dirigée vers l'intérieur par rapport aux pattes 18 et pourvue d'une pluralité d'ondulations 21 venant en appui axial sur l'organe d'étanchéité 13 du roulement 1.

Ainsi, l'organe de liaison 17 assure la retenue axiale élastique de la collerette d'attaque 14 par rapport à la bague extérieure 8 du roulement 1. La collerette d'attaque 14 est centrée par rapport à la bague extérieure 8 grâce au rabat 14b. Le montage s'effectue en rapprochant axialement la collerette d'attaque 14 et l'organe de liaison 17, la bague extérieure 8 se trouvant entre ces deux éléments.

L'extrémité des pattes 18 de l'organe de liaison 17 vient en contact avec les crochets 16, ce qui provoque leur fléchissement radialement vers l'extérieur, puis les fenêtres 19 se trouvent en face des crochets 16 et les pattes 18 reviennent dans leur position initiale en contact avec la portion tubulaire 8a de la bague extérieure 8, les crochets 16 faisant saillie radialement à travers les fenêtres 19. On prévoit qu'après montage, les ondulations 21 de l'organe de liaison 17 restent légèrement comprimées de façon à ce que l'organe de liaison 17 exerce une précontrainte axiale permanente sur la collerette d'attaque 14, et garantisse ainsi son maintien.

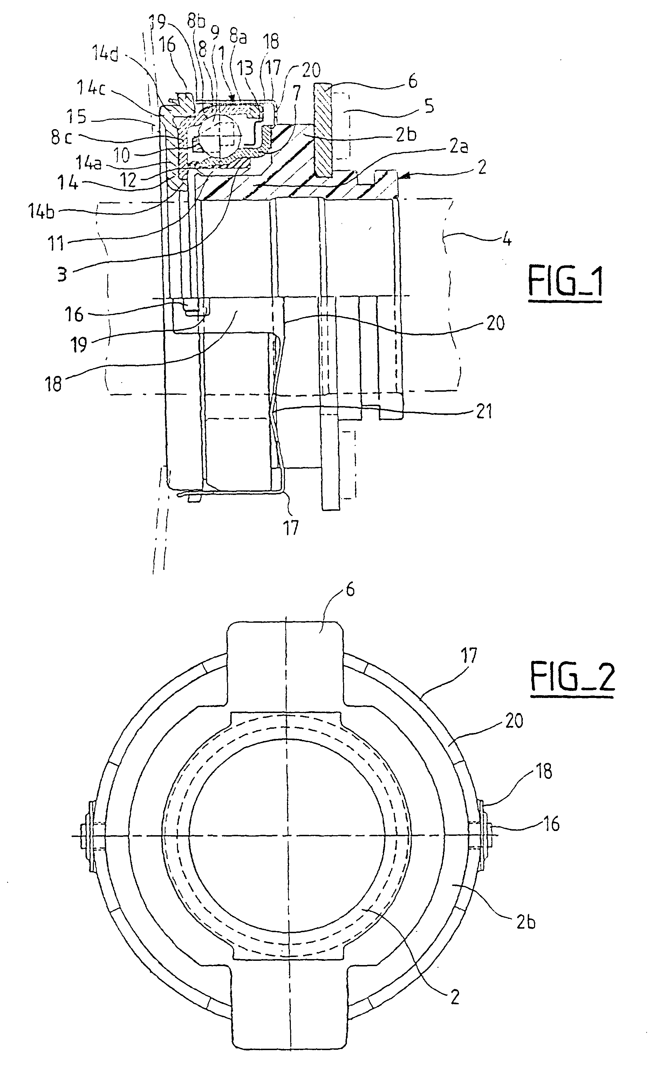

Sur les figures 1, 2 et 5, le bourrelet 14c de la collerette d'attaque 14 est prévu à l'extrémité de grand diamètre de la portion radiale 14a. Selon le type de diaphragme d'embrayage adopté, on peut prévoir un bourrelet 14c dans une autre position, par exemple au milieu de la portion radiale 14a ou à son extrémité de petit diamètre à proximité du rabat 14b. On peut ainsi utiliser un roulement 1 de type standard quel que soit le type de diaphragme d'embrayage utilisé et pour une large gamme de dimensions.

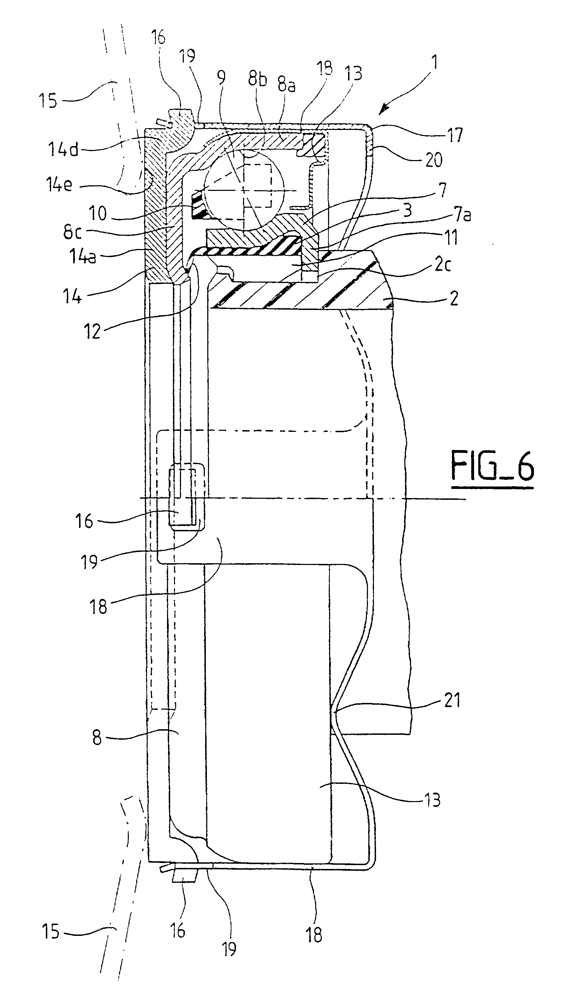

Sur la figure 6 est illustrée une variante dans laquelle le bourrelet de la collerette d'attaque 14 est supprimé. Les doigts 15 de diaphragme d'embrayage sont bombés en direction de la collerette d'attaque 14. La collerette d'attaque 14 est pourvue d'une surface d'appui 14e sur sa portion radiale 14a. L'extrémité libre interne de la collerette d'attaque 14 est légèrement pliée vers l'intérieur de même que l'extrémité libre de la portion radiale 8c. L'élément de manoeuvre 2 est pourvu d'un épaulement 2c en contact avec la portion radiale 7a de la bague intérieure 7 dirigée vers l'intérieur.

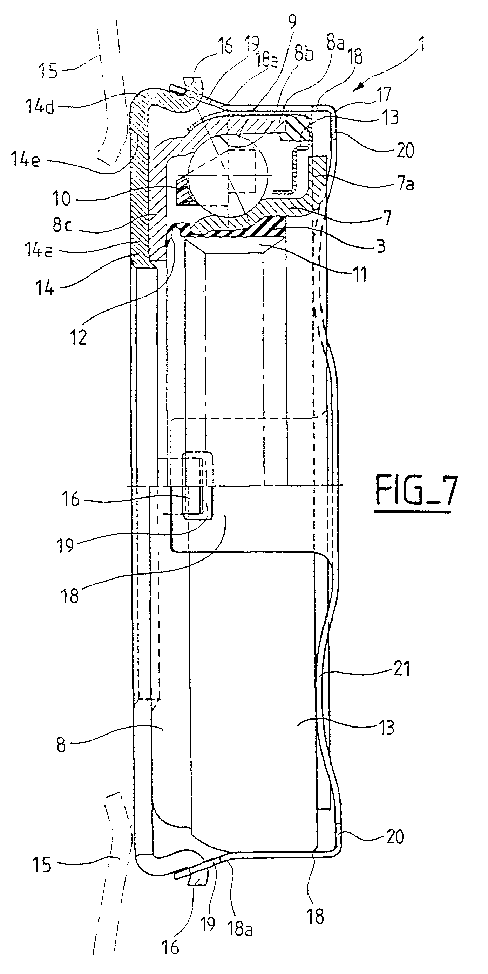

La variante illustrée sur la figure 7 est proche de la précédente, à ceci près que les pattes 18 de l'organe de liaison 17 sont pourvues, à leur extrémité libre, d'une portion 18a oblique, évasée vers l'extérieur, ce qui permet d'utiliser une collerette d'appui 14 de grand diamètre par rapport au diamètre du roulement de butée 1.

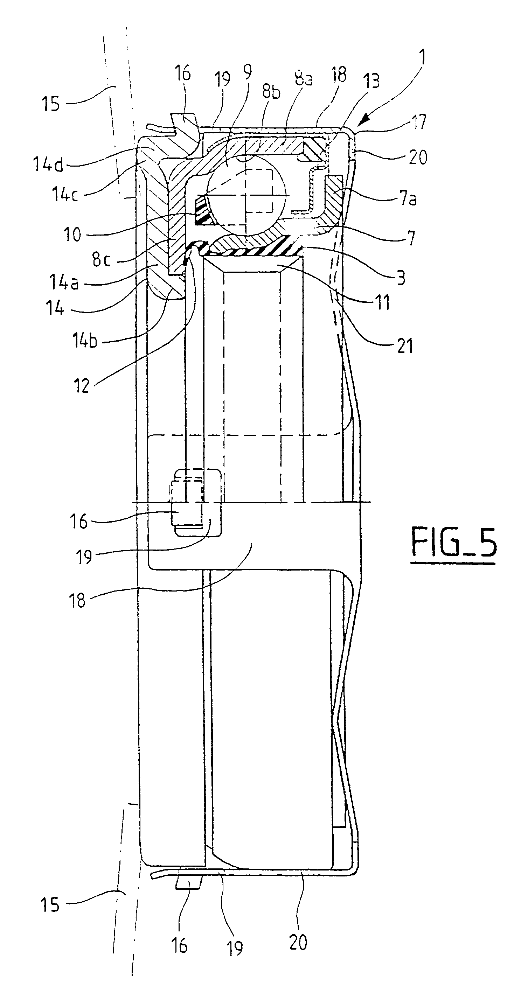

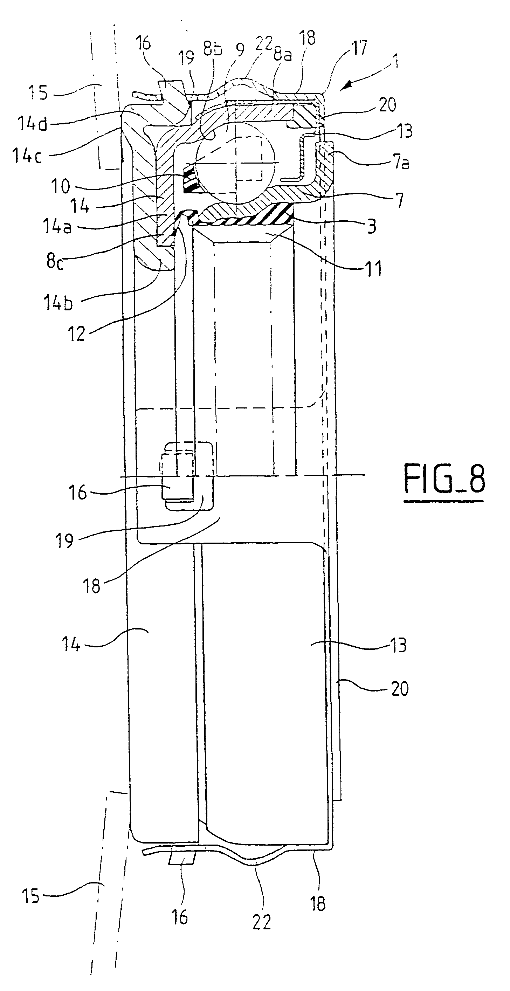

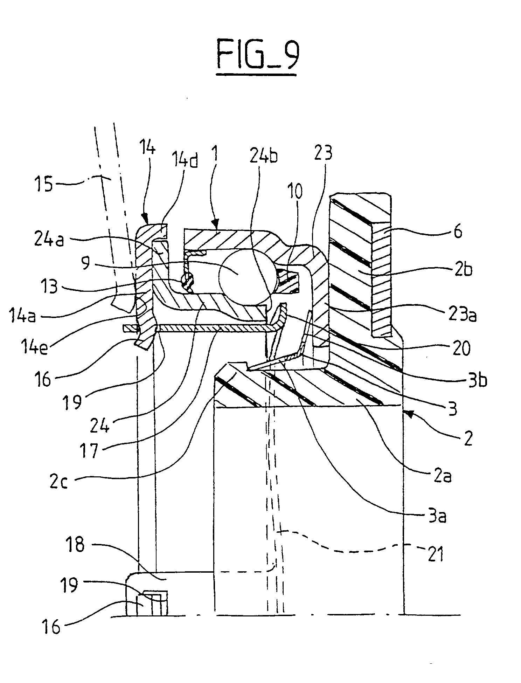

Sur la figure 8, la collerette 14 est identique à celle de la figure 5. Les pattes 18 de l'organe de liaison 17 sont pourvues d'ondulations 22.leur conférant une élasticité axiale. L'embase 20 est radiale et dépourvue d'ondulations. Toutefois, elle pourrait en comporter, à titre de variante. Sur la figure 9, l'élément de manoeuvre 2 est pourvu d'une collerette radiale 2b disposée à l'extrémité libre de la partie tubulaire 2a. L'organe d'autocentrage 3 se présente sous la forme d'une rondelle biconique dont les extrémités sont découpées en languettes 3a et 3b respectivement en appui sur un épaulement 2c et sur un retour radial 23a de la bague extérieure fixe 23, ledit retour étant ainsi maintenu en appui axial permanent contre la collerette radiale 2b. La bague intérieure tournante 24 se prolonge vers l'extérieur par une portion radiale 24a qui reçoit la collerette 14. La collerette 14 comprend une portion radiale 14a, un rebord axial 14d entourant ladite portion radiale 24a et des crochets 16 dirigés vers l'intérieur et légèrement courbés. L'organe de liaison 17 coopère avec les crochets 16 et avec la surface radiale 24b formée par l'extrémité de la bague tournante 24, opposée à la portion radiale 24a. Dans ce mode de réalisation, les pattes 18 de l'organe de liaison 17 s'étendent axialement dans l'alésage de la bague intérieure tournante 24.

La collerette d'attaque sera réalisée en tôle emboutie subissant un traitement thermique de durcissement afin de limiter son usure au contact avec les doigts du diaphragme d'embrayage. L'organe de liaison peut être réalisé à faible coût par découpe et emboutissage à la presse. Grâce à l'invention, on utilise des roulements de butée d'embrayage standardisés pour de nombreux types différents de diaphragmes d'embrayage, seule la collerette d'attaque s'adaptant à la variante du diaphragme utilisé. On obtient ainsi une butée de débrayage particulièrement économique.

## Revendications

1. Dispositif de butée de débrayage du type comprenant un palier à roulement (1) muni d'une bague non tournante (7) et d'une bague tournante (8) réalisées en tôle, ledit dispositif étant capable d'agir sur un diaphragme de mécanisme d'embrayage, et comprenant une collerette d'attaque (14) retenue par rapport à la bague tournante, et prévue pour coopérer avec le diaphragme, et des moyens (17) de retenue élastique exerçant une précontrainte axiale sur la collerette d'attaque (14) qui est maintenue en appui, par une face radiale interne, sur la bague tournante et est prévue pour entrer en contact avec le diaphragme par une face externe opposée à ladite face interne.

2. Dispositif selon la revendication 1, **caractérisé par le fait que** la collerette d'attaque est réalisée en tôle.

3. Dispositif selon l'une quelconque des revendications précédentes, **caractérisé par le fait que** la collerette d'attaque est pourvue de moyens de centrage sur la bague tournante.

4. Dispositif selon la revendication 3, **caractérisé par le fait que** les moyens de centrage comprennent au moins un rabat (14b) capable de coopérer avec une surface complémentaire de la bague tournante.

5. Dispositif selon l'une des revendications précédentes, **caractérisé par le fait que** lesdits moyens de retenue élastique comprennent un organe de liaison (17) axialement élastique.

6. Dispositif selon la revendication 5, **caractérisé par le fait que** l'organe de liaison comprend une pluralité de pattes (18) s'étendant axialement autour de la bague tournante et pourvues de fenêtres (19), la collerette d'attaque comprenant des excroissances radiales formant crochets (16) capables de coopérer avec lesdites fenêtres.

7. Dispositif selon la revendication 5, **caractérisé par le fait que** l'organe de liaison comprend une pluralité de pattes (18) s'étendant axialement dans l'alésage de la bague fournante et pourvues de fenêtres (19), la collerette d'attaque comprenant des excroissances radiales formant crochets (16) capables de coopérer avec lesdites fenêtres.

8. Dispositif selon la revendication 6 ou 7, **caractérisé par le fait que** les pattes sont élastiques axialement.

9. Dispositif selon l'une quelconque des revendications 5 à 8, **caractérisé par le fait que** l'organe de liaison comprend une embase circulaire (20) en forme de rondelle et venant en appui sur la bague tournante axialement à l'opposé de la collerette d'attaque.

10. Dispositif selon la revendication 9, **caractérisé par le fait que** l'embase comprend des ondulations circonférentielles (21).

## Patentansprüche

1. Kupplungsausrücklagervorrichtung in der Bauart mit einem Wälzlager (1), das einen stillstehenden Ring (7) und einen umlaufenden Ring (8) aufweist, die aus Blech hergestellt sind, wobei die Vorrichtung in der Lage ist, auf eine Membranfeder der Kupplungsvorrichtung zu wirken, und wobei sie einen bezüglich des umlaufenden Rings festgehaltenen Andruckkring (14), der dazu dient, mit der Membranfeder zusammenzuwirken, sowie elastische Haltemittel (17) enthält, die eine axiale Vorspannung auf den Andruckring (14) ausüben, der über eine radiale Innenfläche gegen den umlaufenden Ring in Anschlag gehalten wird und der dazu eingerichtet ist, um über eine der Innenfläche gegenüberliegende Außenfläche mit der Membranfeder in Berührung zu kommen.

2. Vorrichtung nach Anspruch 1, **dadurch gekennzeichnet, dass** der Andruckring aus Blech hergestellt ist.

3. Vorrichtung nach einem der vorhergehenden Ansprüche, **dadurch gekennzeichnet, dass** der Andruckring mit Mitteln zur Zentrierung auf dem umlaufenden Ring versehen ist.

4. Vorrichtung nach Anspruch 3, **dadurch gekennzeichnet, dass** die Zentriermittel mindestens einen rohrförmigen Fortsatz (14b) aufweisen, der in der Lage ist, mit einer zugehörigen Fläche des umlaufenden Rings zusammenzuwirken.

5. Vorrichtung gemäß einem der vorausgehenden Ansprüche, **dadurch gekennzeichnet, dass** die elastischen Haltemittel ein in axialer Richtung elastisches Verbindungselement (17) aufweisen.

6. Vorrichtung nach Anspruch 5, **dadurch gekennzeichnet, dass** zu dem Verbindungselement eine Vielzahl von Klauen (18) gehören, die sich um den umlaufenden Ring herum in axialer Richtung erstrecken und die mit Fenstern (19) versehen sind, wobei der Andruckring radiale Erhöhungen aufweist, die Haken (16) bilden, die in der Lage sind, mit den Fenstern zusammenzuwirken.

7. Vorrichtung nach Anspruch 6, **dadurch gekennzeichnet, dass** das Verbindungselement eine Vielzahl von Klauen (18) aufweist, die in axialer Richtung in den zylindrischen Innenraum des umlaufenden Rings ragen und mit Fenstern (19) versehen sind, wobei der Andruckring radiale Erhöhungen aufweist, die Haken (16) bilden, die in der Lage sind, mit den Fenstern zusammenzuwirken.

8. Vorrichtung nach Anspruch 6 oder 7, **dadurch gekennzeichnet, dass** die Klauen in axialer Richtung elastisch sind.

9. Vorrichtung nach einem der Ansprüche 6 bis 9, **dadurch gekennzeichnet, dass** das Verbindungselement einen scheibenförmig gestalteten, kreisrunden Sockel (20) aufweist, der sich in axialer Richtung auf der dem Andruckring gegenüberliegenden Seite an dem umlaufenden Ring abstützt.

10. Vorrichtung nach Anspruch 9, **dadurch gekennzeichnet, dass** der Sockel längs seines Umfangs mit Wellen (21) versehen ist.

## Claims

1. Clutch release bearing device of the type comprising a rolling bearing (1) equipped with a non-rotating race (7) and with a rotating race (8) which are made of sheet metal, the said device being capable of acting on a clutch mechanism diaphragm and comprising an operating flange (14) held with respect to the rotating race and designed to collaborate with the diaphragm, and means (17) of elastic retention exerting an axial preload on the operating flange (14) which is kept bearing, via an internal radial face, against the rotating race and is designed to come into contact with the diaphragm via an external face which is the opposite to the said internal face.

2. Device according to Claim 1, **characterized in that** the operating flange is made of sheet metal.

3. Device according to either one of the preceding claims, **characterized in that** the operating flange is provided with means of centring on the rotating race.

4. Device according to Claim 3, **characterized in that** the centring means comprise at least one tag (14b) capable of collaborating with a complementary surface of the rotating race.

5. Device according to one of the preceding claims, **characterized in that** the said means of elastic retention comprise an axially elastic connecting member (17).

6. Device according to Claim 5, **characterized in that** the connecting member comprises a number of tabs (18) extending axially around the rotating race and provided with apertures (19), the operating flange comprising radial protrusions forming hooks (16) capable of collaborating with the said apertures.

7. Device according to Claim 7 [sic], **characterized in that** the connecting member comprises a number of tabs (18) extending axially into the bore of the rotating race and provided with apertures (19), the operating flange comprising radial protrusions forming hooks (16) capable of collaborating with the said apertures.

8. Device according to Claim 6 or 7, **characterized in that** the tabs are axially elastic.

9. Device according to any one of Claims 6 to 9 [sic], **characterized in that** the connecting member comprises a circular base (20) in the form of a washer and resting against the rotating race axially on the opposite side to the operating flange.

10. Device according to Claim 9, **characterized in that** the base comprises circumferential undulations (21).
